# FASCICULE DE BREVET EUROPEEN

(11) **EP 3 233 328 B1**
(45) Date de publication et mention de la délivrance du brevet: **27.01.2021**
(21) Numéro de dépôt: 15822972.4
(22) Date de dépôt: 15.12.2015
(51) Int. Cl.: B22C 9/10, F01D 5/28

(54) **PROCÉDÉ DE FABRICATION D'UNE AUBE DE TURBOMACHINE COMPORTANT UN SOMMET POURVU D'UNE BAIGNOIRE DE TYPE COMPLEXE**
VERFAHREN ZUR HERSTELLUNG EINER TURBINENMOTORSCHAUFEL MIT SPITZE MIT KOMPLEXER BOHRUNG
METHOD FOR MANUFACTURING A TURBINE ENGINE BLADE INCLUDING A TIP PROVIDED WITH A COMPLEX WELL

(30) Priorité: 17.12.2014 FR 1462614
(43) Date de publication de la demande: 25.10.2017
(73) Titulaire: SAFRAN AIRCRAFT ENGINES, 75015 Paris (FR)
(72) Inventeur: COYEZ, Dominique, 77550 Moissy Cramayel (FR); BARIAUD, Christian, 77550 Moissy Cramayel (FR); BENICHOU, Sami, 77550 Moissy Cramayel (FR); HANNY, Jean-Claude, Marcel, Auguste, 77550 Moissy Cramayel (FR)
(74) Mandataire: Brevalex
(86) Numéro de dépôt international: PCT/FR2015/053517
(87) Numéro de publication internationale: WO 2016/097586

(56) Documents cités:
- EP-A1- 1 754 555
- US-A1- 2008 164 001

## Description

### DOMAINE TECHNIQUE

L'invention concerne la fabrication d'une aube de moteur d'aéronef de type turbomachine, tel que par exemple un turboréacteur ou un turbopropulseur.

### ETAT DE LA TECHNIQUE ANTERIEURE

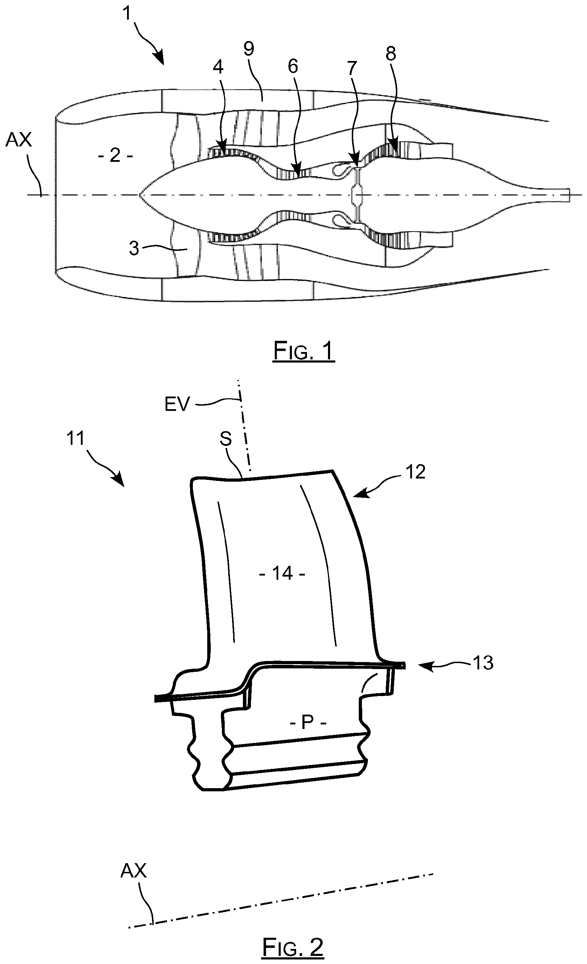

Dans un tel moteur, repéré par 1 dans la figure 1, l'air est admis dans une manche d'entrée 2 pour traverser une soufflante comportant une série de pales rotatives 3 avant de se scinder en un flux primaire central et un flux secondaire entourant le flux primaire.

Le flux primaire est compressé par des turbines 4 et 6 avant d'atteindre une chambre de combustion 7, après quoi il se détend en traversant des turbines 8, avant d'être évacué en générant une poussée. Le flux secondaire est quant à lui propulsé directement par la soufflante pour générer une poussée complémentaire.

Chaque turbine 8 comporte des séries d'aubes orientées radialement et régulièrement espacées autour d'un arbre de rotation AX porté par un carter externe 9 entourant l'ensemble.

Le refroidissement des aubes est assuré en faisant circuler dans chaque aube de l'air prélevé en amont de la combustion et admis en pied d'aube, cet air étant évacué par des perçages traversant les parois de ces aubes.

Une telle aube, qui est repérée par 11 sur la figure 2, comprend un pied P par lequel elle est fixée à un corps rotatif, et une pale 12 portée par ce pied P, le pied et la pale étant séparés par une plateforme 13.

La pale 12 a une forme gauche vrillée autour d'un axe EV dit axe d'envergure qui est perpendiculaire à l'axe AX. Elle comprend une base par laquelle elle est raccordée à la plateforme 13 et qui se prolonge radialement jusqu'à un sommet S qui est l'extrémité libre de cette pale. Les deux parois principales de la pale sont sa paroi d'intrados 14 et sa paroi d'extrados qui sont espacées l'une de l'autre.

Le sommet S de l'aube 11 comporte une paroi de fermeture perpendiculaire à la direction EV, et qui raccorde les parois d'intrados et d'extrados. Cette paroi de fermeture non visible sur la figure 2 est en retrait vers l'axe AX par rapport aux bords libre des parois d'intrados et d'extrados. Elle délimite conjointement avec ces bords une portion creuse ouverte en direction opposée à l'axe AX, appelée baignoire qui est située en tête de l'aube.

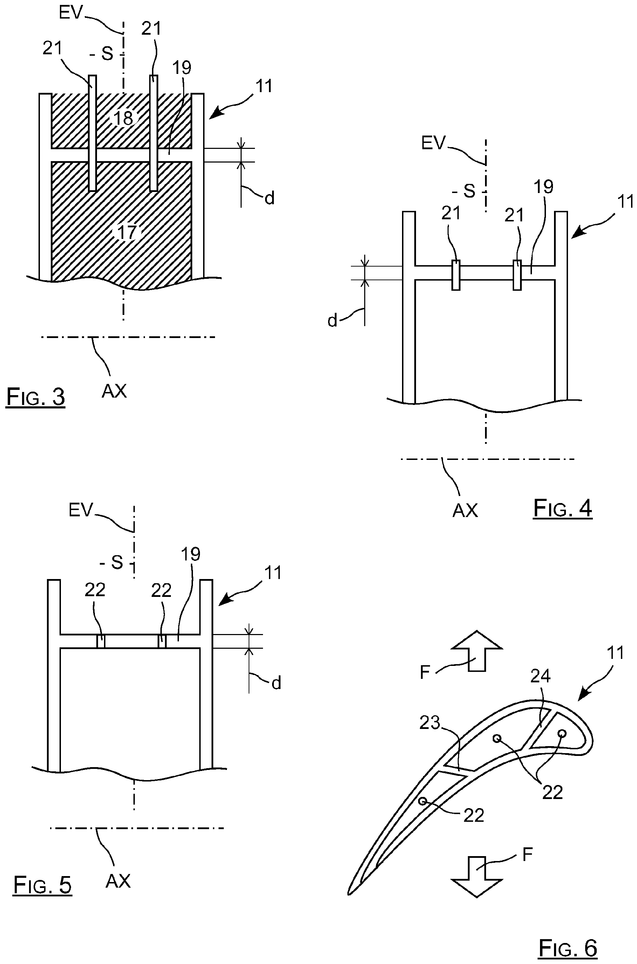

Une telle aube est fabriquée par moulage d'un matériau métallique, en utilisant notamment un premier et un second noyau 17 et 18 pour délimiter son espace interne et la zone en baignoire, comme illustré schématiquement sur la figure 3. Ces deux noyaux 17 et 18 sont espacés l'un de l'autre le long de la direction d'envergure EV par une faible distance, notée d, et qui correspond à la paroi de fermeture repérée par 19 dans la figure 3.

Le second noyau 18 est traversé par des tiges d'alumine 21 parallèles à l'axe EV, qui traversent la région de la paroi de fermeture 19, et dont les extrémités sont prises dans le premier noyau 17. Ces tiges permettent d'une part de maintenir en position ces noyaux l'un par rapport à l'autre durant l'opération de coulée, et elles permettent d'autre part de former des trous assurant un dépoussiérage lorsque l'aube est ensuite en fonctionnement.

Après coulée et refroidissement de l'alliage constituant l'aube, les noyaux 17 et 18 sont retirés par attaque chimique, ce qui conduit à la situation de la figure 4, où subsistent encore des portions de tiges d'alumine traversant la paroi de fermeture 19. Le retrait des portions de tiges d'alumine restantes, appelé décochage, est réalisé avec une deuxième attaque chimique.

L'aube est alors, comme visible en figure 5, complètement débarrassée des artifices ayant servi à son moulage, et elle présente au niveau de sa paroi de fermeture 19 deux trous traversants 22 correspondant aux tiges d'alumine retirées. Ces trous 22 sont les trous de dépoussiérage assurant l'évacuation d'éventuelles poussières pour empêcher qu'elles ne s'accumulent à l'intérieur de l'aube lorsque celle-ci est en fonctionnement.

Les besoins accrus en performances conduisent à optimiser le refroidissement de la baignoire, en prévoyant par exemple des nervures ou cloisons internes portées par le fond de baignoire, c'est-à-dire la paroi de fermeture 19. Ces cloisons ou nervures repérées par 23 et 24 dans l'exemple symbolique de la figure 6 visent à optimiser l'aérodynamisme dans la baignoire pour y assujettir l'écoulement d'air afin d'homogénéiser son refroidissement.

L'ajout de telles nervures ou cloisons complique significativement l'élaboration du second noyau en céramique 18. En effet, celui-ci est fabriqué avec une boîte à noyau, c'est-à-dire un moule en deux parties qui s'ouvrent en s'écartant l'une de l'autre, mais selon une direction de démoulage et qui s'étend dans un plan normal à l'axe d'envergure de la pale. Cette direction de démoulage est représentée par les flèches D dans la figure 6.

La contrainte de cette direction de démoulage, qui résulte d'impératifs de fabrication, fait que des fentes délimitant les nervures pour le fond de la baignoire ne peuvent pas être prévues en extrémité du second noyau. Dans une telle aube divulguée par le document EP1754555, de telles fentes ne sont pas prévues car elles constitueraient des contre-dépouilles rendant impossible le démoulage du second noyau lors de sa fabrication, du fait que leurs orientations diffèrent de la direction de démoulage.

Une possibilité consisterait à fabriquer un second noyau en plusieurs parties de céramique assemblées les unes aux autres par collage. Ceci complique significativement la fabrication et tend par conséquence à augmenter le taux de rebut.

L'objet de l'invention est d'apporter un procédé de fabrication permettant de réaliser une grande variété de formes internes au niveau de la baignoire sans pénaliser le coût et le taux de rebut.

### EXPOSÉ DE L'INVENTION

A cet effet, l'invention a pour objet un procédé de fabrication d'une aube de turbomachine comprenant une paroi d'intrados et une paroi d'extrados séparées l'une de l'autre par un espace interne de circulation d'air de refroidissement, cette aube comprenant un sommet avec une paroi de fermeture réunissant les parois d'intrados et d'extrados dans la région de ce sommet pour délimiter une forme de baignoire, cette paroi de fermeture comprenant des trous traversants, le procédé comportant une étape de moulage mettant en œuvre un noyau délimitant la forme en baignoire et des tiges d'alumine délimitant chaque trou traversant, une opération d'attaque chimique du noyau et une opération d'attaque chimique des tiges d'alumine pour retirer ce noyau et ces tiges après moulage, caractérisé en ce que le noyau est pourvu de bosses au niveau de chaque trou traversant pour conférer à la paroi de fermeture telle qu'issue de moulage une épaisseur nominale supérieure à l'épaisseur des autres parois de l'aube et une épaisseur réduite au niveau de chaque trou traversant, et en ce que le procédé comporte une opération d'usinage de la paroi de fermeture pour former une ou des formes en relief en fond de baignoire.

Ce procédé de fabrication permet ainsi de fabriquer une aube comportant une baignoire ayant une forme interne complexe sans impliquer une modification fondamentale des opérations et outils propres au moulage de la pièce brute à partir de laquelle est formée l'aube.

L'invention concerne également un procédé ainsi défini, dans lequel le noyau est conformé pour conférer à la paroi de fermeture une épaisseur nominale et une épaisseur réduite au niveau de trous traversants qui sont telles que le rapport de l'épaisseur nominale sur l'épaisseur réduite est supérieur ou égal à 2,5.

L'invention concerne également un procédé ainsi défini, dans lequel le noyau est conformé pour conférer à la paroi de fermeture des épaisseurs telles que le rapport de l'épaisseur nominale sur l'épaisseur réduite est supérieur ou égal à 5.

L'invention concerne également un procédé ainsi défini, dans lequel l'opération d'usinage de la paroi de fermeture est agencée pour y former une ou plusieurs nervures ou cloisons internes.

### BRÈVE DESCRIPTION DES DESSINS

La figure 1 déjà décrite est une vue d'ensemble d'un turboréacteur à double flux représenté en coupe latérale ;
La figure 2 déjà décrite est une vue d'ensemble d'une aube de réacteur;
La figure 3 déjà décrite est une vue en coupe d'une aube de l'Etat de la technique lors de son moulage ;
La figure 4 déjà décrite est une vue en coupe d'une aube de l'Etat de la technique après retrait des noyaux utilisés pour le moulage ;
La figure 5 déjà décrite est une vue en coupe d'une aube de l'Etat de la technique après retrait des tiges d'alumine ;
La figure 6 est une vue de dessus d'une baignoire d'aube pourvue de nervures internes additionnelles ;
La figure 7 est une vue en coupe d'une aube selon l'invention lors de son moulage ;
La figure 8 est une vue en coupe d'une aube selon l'invention après retrait des noyaux utilisés pour le moulage ;
La figure 9 est une vue en coupe d'une aube selon l'invention après retrait des tiges d'alumine.

### EXPOSÉ DÉTAILLÉ DE MODES DE RÉALISATION PARTICULIERS

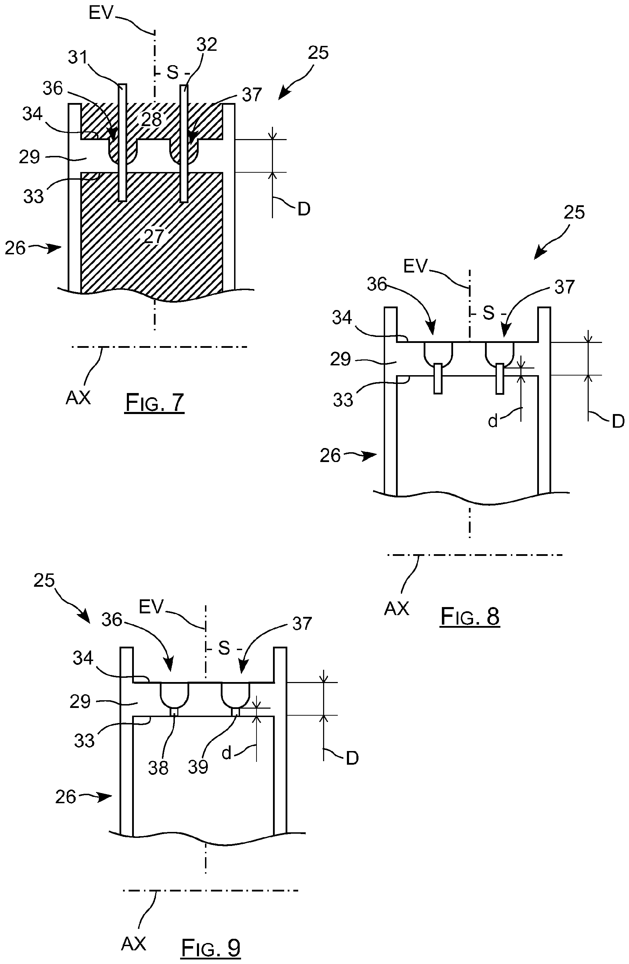

L'aube selon l'invention, repérée par 25 dans la figure 7 comporte elle aussi une pale 26 portée par un pied et ayant une forme correspondant globalement à celle de l'aube des figures 2 à 6. Les termes inférieur et supérieur utilisés dans la suite s'entendent en fonction de l'orientation des figures, dans lesquelles la pale est vers le haut en étant portée par un pied situé vers le bas bien que non représenté.

Cette pale comporte elle aussi une paroi d'intrados et une paroi d'extrados espacées l'une de l'autre et qui sont réunies au niveau du sommet de pale S par une paroi de fermeture repérée par 29 dans les figures 7 à 9. Cette paroi de fermeture est perpendiculaire à la direction d'envergure EV de la pale et en retrait vers l'axe AX de rotation de la pale, par rapport aux bords libres des parois d'intrados et d'extrados.

Cette paroi de fermeture délimite conjointement avec les bords libres de l'intrados et de l'extrados une portion creuse ouverte en direction opposée à l'axe AX, appelée baignoire.

L'aube est là aussi fabriquée par moulage d'un matériau métallique, avec un premier et un second noyau 27 et 28 délimitant l'espace interne et la baignoire, comme illustré sur la figure 7. Ces deux noyaux 27 et 28 sont espacés l'un de l'autre le long de la direction d'envergure EV, pour délimiter la paroi de fermeture repérée par 29.

Cette paroi de fermeture 29 a ici une épaisseur nominale, notée D, significativement plus élevée que dans le cas des aubes de l'état de la technique de manière à pouvoir être usinée pour y former des cloisons ou nervures additionnelles telles que celles de la figure 6.

Cette paroi de fermeture est traversée par deux tiges d'alumine 31, 32, prises dans les deux noyaux 27 et 28 pour les maintenir en position l'un par rapport à l'autre durant la coulée de l'alliage constituant l'aube en soi.

Après coulée et refroidissement de l'alliage, les noyaux 27 et 28 sont retirés par attaque chimique, ce qui conduit à la situation de la figure 8, où subsistent encore des portions de tiges d'alumine traversant la paroi de fermeture 29. Le retrait des portions de tiges d'alumine restantes, appelé décochage, est réalisé avec une deuxième attaque chimique, qui permet ainsi de débarrasser complètement l'aube des éléments ayant servi à son moulage.

Pour rendre l'opération de décochage des tiges possible, l'épaisseur de la paroi de fermeture 29 est réduite au niveau de chaque passage de tige d'alumine à une valeur notée d, significativement plus faible que l'épaisseur nominale D de cette paroi fermeture 29.

L'épaisseur d qui correspond à l'épaisseur de décochage est de préférence supérieure à six dixièmes de millimètre et inférieure à huit dixièmes de millimètre, alors que l'épaisseur nominale de la paroi 29 peut être de l'ordre de deux millimètres, et de préférence supérieure ou égale à trois millimètres.

Ainsi, le rapport de l'épaisseur nominale D de la paroi de fermeture 29 sur l'épaisseur réduite d de cette paroi au niveau de chaque passage de tige d'albumine 31, 32 est supérieur ou égal à 2,5 et de préférence supérieure ou égal à 5.

Plus particulièrement, la face inférieure 33 de la paroi de fermeture 29, à savoir la face la plus proche de l'axe AX et qui donne sur l'espace interne de l'aube est sensiblement plane, de même que l'extrémité du noyau 27 qui délimite cette face. La face supérieure 34 de cette paroi, à savoir la plus éloignée de l'axe AX et qui délimite le fond de la baignoire, comporte au contraire un creux ou puits au niveau de chaque passage de tige d'alumine, ces puits étant repérés par 36 et 37.

Comme il ressort des figures, cette forme particulière de la face supérieure, avec des puits, résulte de deux reliefs ou bosses correspondants réalisés en extrémité du noyau 28 au niveau de chaque passage de tige d'alumine. Ces bosses peuvent être obtenues simplement en réalisant des évidements au niveau de la zone correspondante de la boîte à noyaux, c'est-à-dire du moule, servant à la fabrication du second noyau.

Chaque puits peut avoir une forme cylindrique conique évasée ou autre fin de constituer pour l'opération de décochage un réservoir recevant le liquide de décochage qui est un bain basique. L'épaisseur de la paroi au niveau du fond de chaque puits, notée d, correspond à l'épaisseur maximale possible pour assurer le décochage des tiges.

Dans l'exemple des figures, chaque puits comporte un fond hémisphérique prolongé par un flanc cylindrique, mais différentes formes peuvent être envisagées, en fonction notamment des contraintes dues au processus moulage qui est prévu pour la fabrication de la pièce brute destinée à constituer l'aube.

Comme représenté schématiquement dans les figures 8 et 9, grâce aux puits 36 et 37 la paroi de fermeture 29 a une faible épaisseur localement au niveau de chaque passage de tige d'alumine pour permettre le retrait de ces tiges par attaque basique afin de former les trous de dépoussiérage correspondants, repérés par 38 et 39.

Le brut d'aube qui est représenté sur la figure 9 présente ainsi une baignoire au niveau de son sommet, mais dont le fond présente une épaisseur nominale importante. Il est ainsi possible de former dans ce fond 29 des nervures ou cloisons de formes complexes comme par exemple celles de la figure 6, simplement par usinage du fond de baignoire.

Autrement dit, l'invention permet de fabriquer une aube présentant à son sommet une baignoire dont la région intérieure peut être pourvue de quasiment tout type de nervure, artifice, perturbateur d'écoulement ou autre, sans pour autant compliquer le processus de moulage. En effet, grâce aux bosses 36, 37 prévues en extrémité du second noyau 28, la paroi de fermeture 29 peut avoir une épaisseur nominale élevée sans nécessité de processus spécifique pour retirer les tiges d'alumine de cette paroi de fermeture après moulage. L'invention permet ainsi la fabrication d'une aube à baignoire complexe sans pénaliser le processus de moulage et de fabrication des noyaux.

## Revendications

1. Procédé de fabrication d'une aube (25) de turbomachine comprenant une paroi d'intrados et une paroi d'extrados séparées l'une de l'autre par un espace interne de circulation d'air de refroidissement, cette aube (25) comprenant un sommet (S) avec une paroi de fermeture (29) réunissant les parois d'intrados et d'extrados dans la région de ce sommet (S) pour délimiter une forme de baignoire, cette paroi de fermeture (29) comprenant des trous traversants (38, 39), le procédé comportant une étape de moulage mettant en œuvre un noyau (28) délimitant la forme en baignoire et des tiges d'alumine (31, 32) délimitant chaque trou traversant (38, 39), une opération d'attaque chimique du noyau (28) et une opération d'attaque chimique des tiges d'alumine (31, 32) pour retirer ce noyau et ces tiges après moulage, **caractérisé en ce que** le noyau (28) est pourvu de bosses au niveau de chaque trou traversant (38, 39) pour conférer à la paroi de fermeture (29) telle qu'issue de moulage une épaisseur nominale (D) supérieure à l'épaisseur des autres parois de l'aube et une épaisseur réduite (d) au niveau de chaque trou traversant (38, 39), et **en ce que** le procédé comporte une opération d'usinage de la paroi de fermeture (29) pour former une ou des formes en relief en fond de baignoire.

2. Procédé selon la revendication 1, dans lequel le noyau (18) est conformé pour conférer à la paroi de fermeture une épaisseur nominale (D) et une épaisseur réduite (d) au niveau de trous traversants (38, 39) qui sont telles que le rapport de l'épaisseur nominale (D) sur l'épaisseur réduite (d) est supérieur ou égal à 2,5.

3. Procédé selon la revendication 2, dans lequel le noyau (18) est conformé pour conférer à la paroi de fermeture des épaisseurs (d, D) telles que le rapport de l'épaisseur nominale (D) sur l'épaisseur réduite (d) est supérieur ou égal à 5.

4. Procédé selon l'une des revendications 1 à 3, dans lequel l'opération d'usinage de la paroi de fermeture est agencée pour y former une ou plusieurs nervures ou cloisons internes.

## Patentansprüche

1. Verfahren zur Herstellung einer Turbinenmotorschaufel (25) mit einer Druckseitenwand und einer Saugseitenwand, die durch einen Innenraum zur Zirkulation von Kühlungsluft voneinander getrennt sind, wobei die Schaufel (25) eine Spitze (S) mit einer Abschlusswand (29) aufweist, welche die Druckseitenwand und die Saugseitenwand im Bereich der Spitze (S) zusammenführt, um eine Wannenform abzugrenzen, wobei die Abschlusswand (29) Durchgangslöcher (38, 39) aufweist, wobei das Verfahren einen Formschritt, der einen die Wannenform begrenzenden Kern (28) sowie das jeweilige Durchgangsloch (38, 39) begrenzende Aluminiumstifte (31, 32) verwirklicht, einen chemischen Ätzvorgang des Kerns (28) sowie einen chemischen Ätzvorgang der Aluminiumstifte (31, 32) umfasst, um den Kern und die Stifte nach dem Formen zu entfernen, **dadurch gekennzeichnet, dass** der Kern (28) mit Erhebungen auf gleicher Höhe mit dem jeweiligen Durchgangsloch (38, 39) versehen ist, um der sich aus der Formung ergebenden Abschlusswand (29) eine Nennstärke (D), die größer als die Stärke der anderen Wände der Schaufel ist, sowie eine verringerte Stärke (d) auf der Höhe des jeweiligen Durchgangslochs (38, 39) zu verleihen, und dass das Verfahren einen Bearbeitungsvorgang der Abschlusswand (29) umfasst, um in dem Wannenboden eine Reliefform oder Reliefformen auszubilden.

2. Verfahren nach Anspruch 1, wobei der Kern (18) dazu angepasst ist, der Abschlusswand eine Nennstärke (D) und eine verringerte Stärke (d) auf der Höhe der Durchgangslöcher (38, 39) zu verleihen, die derart ausgebildet sind, dass das Verhältnis der Nennstärke (D) zu der verringerten Stärke (d) größer als oder gleich 2,5 ist.

3. Verfahren nach Anspruch 2, wobei der Kern (28) dazu angepasst ist, der Abschlusswand Stärken (d, D) derart zu verleihen, dass das Verhältnis der Nennstärke (D) zu der verringerten Stärke (d) größer als oder gleich 5 ist.

4. Verfahren nach einem der Ansprüche 1 bis 3, wobei der Bearbeitungsvorgang der Abschlusswand so vorgesehen ist, dass in dieser eine oder mehrere innere Rippen oder Trennwände ausgebildet werden.

## Claims

1. Method for manufacturing a turbine engine blade (25) comprising a pressure side wall and a suction side wall separated from one another by an inner space for the circulation of cooling air, this blade (25) comprising a tip (S) with a closing wall (29) joining the pressure side and suction side walls in the region of this tip (S) in order to define a well shape, this closing wall (29) comprising through-holes (38, 39), with the method comprising a step of moulding implementing a core (28) delimiting the shape as a well and alumina rods (31, 32) delimiting each through-hole (38, 39), a chemical etching operation of the core (28) and a chemical etching operation of the alumina rods (31, 32) in order to remove this core and these rods after moulding, **characterised in that** the core (28) is provided with bosses at each through-hole (38, 39) in order to confer upon the closing wall (29) such as obtained by moulding a nominal thickness (D) greater than the thickness of the other walls of the blade and a reduced thickness (d) at each through-hole (38, 39), and **in that** the method comprises an operation of machining the closing wall (29) in order to form a raised pattern or patterns at the bottom of the well.

2. Method according to claim 1, wherein the core (18) is conformed to confer upon the closing wall a nominal thickness (D) and a reduced thickness (d) at through-holes (38, 39) which are such that the ratio of the nominal thickness (D) over the reduced thickness (d) is greater than or equal to 2.5.

3. Method according to claim 2, wherein the core (18) is conformed to confer upon the closing wall thicknesses (d, D) such that the ratio of the nominal thickness (D) over the reduced thickness (d) is greater than or equal to 5.

4. Method according to one of claims 1 to 3, wherein the machining operation of the closing wall is arranged to form therein one or several ribs or inner partitions.
